# EUROPEAN PATENT APPLICATION

(11) **EP 4 832 146 A1**
(43) Date of publication of application: **28.10.2026**
(21) Application number: 24907709.0
(22) Date of filing: 15.10.2024
(51) Int. Cl.: H01M 10/54, B09B 3/35, B09B 3/40, B09B 3/80, B09B 101/16

(54) **COMPOSITION FOR RECOVERING LITHIUM COMPOUNDS, AND BATTERY TREATMENT METHOD**

(30) Priority: 18.12.2023 KR 20230185041
(71) Applicant: POSCO Holdings Inc., Pohang-si, Gyeongsangbuk-do 37859 (KR)
(72) Inventor: HAN, Sangwoo, Pohang-si, Gyeongsangbuk-do 37859 (KR); PARK, Joongkil, Pohang-si, Gyeongsangbuk-do 37859 (KR); KIM, Wanyi, Pohang-si, Gyeongsangbuk-do 37859 (KR); PARK, Junyong, Pohang-si, Gyeongsangbuk-do 37859 (KR); KIM, Hak, Pohang-si, Gyeongsangbuk-do 37859 (KR)
(74) Representative: Pfenning, Meinig & Partner mbB
(86) International application number: PCT/KR2024/015632
(87) International publication number: WO 2025/135424

(57) **Abstract**

The present invention relates to a composition for recovering a lithium compound and a battery processing method. The battery processing method of the present invention includes preparing a battery including lithium (Li) and aluminum (Al), shredding the battery into battery shredded material, and high-temperature heat-treating the shredded battery shredded material, wherein the high-temperature heat-treating includes heat-treating in a temperature range of 600 to 1,500°C, and in the preparing of the battery, lithium and aluminum in the battery satisfy the following Formula 1. <Formula 4> $0.1 \leq \left[Li\right] / \left[Al\right] \leq 1.0$ wherein, in Formula 4, [Li] and [Al] mean weight ratios (wt%) of lithium and aluminum in the battery.

## Description

### [TECHNICAL FIELD]

The present invention relates to waste batteries, and more particularly, to a composition for recovering valuable metals obtained by processing waste batteries and a method for processing a battery therefor.

### [BACKGROUND ART]

As demand for electric vehicles is becoming active worldwide, the issue of treating waste batteries generated from the electric vehicles is emerging as a social issue. In the case of lithium secondary batteries, which are a main raw material of the waste batteries, organic solvents, explosive materials, and heavy metal materials such as Ni, Co, Mn, and Fe are contained therein. However, Ni, Co, Mn, and Li have great scarcity value as valuable metals, and recovery and recycling processes after lithium secondary batteries are discarded are emerging as important research fields.

Specifically, a lithium secondary battery mainly includes copper and aluminum used as current collectors, Li-, Ni-, Co-, and Mn-containing oxides constituting a positive electrode material, and graphite used as a negative electrode material, and includes a separator for separating the positive electrode material and the negative electrode material and an electrolyte solution injected into the separator. Solvents constituting the electrolyte solution and solvents used as salts are mainly used by mixing carbonate-based organic materials such as ethylene carbonate and propylene carbonate, and, for example, LiPF₆ is used.

Conventional technologies include dry and wet treatment processes. In the case of the dry process, alloying is performed using a nickel-based molten metal, and at this time, lithium is vaporized and volatilized in a high-temperature environment or forms a compound with slag floating on the upper portion of the molten metal, thereby having a low purity of 4% or less. At this time, the compound with the slag is in a state including many impurities including lithium, aluminum, silicon, calcium, and the like, and in order to treat the same, the treatment cost of the slag becomes very high. Specifically, when slag is formed by a process of alloying with molten metal in a conventional dry process, there is a problem that Ca and Si contents are very high.

In the wet treatment process, development of a waste battery recycling process for recovering valuable metals through a subsequent process after shredding the waste battery to generate an intermediate material such as waste battery shredded material or black powder is being actively conducted.

The recovered valuable metals undergo a process of recovering Li, Ni, Co, Mn, and the like, which are valuable metals in the battery, through acid leaching. Valuable metals in the battery are subjected to acid leaching in an ionized state using an acid such as sulfuric acid, and then a process for removing impurities is performed. Ni, Co, Mn, and the like in sulfuric acid from which impurities have been removed are extracted in the form of sulfides through solvent extraction and crystallization.

After sulfuric acid leaching, the Li content in sulfuric acid becomes about 6 to 10 g/L, but after solvent extraction and crystallization of Ni, Co, Mn, and the like, Li remaining in sulfuric acid is diluted to about 1 to 2 g/L. In order to manufacture Li for battery manufacturing using a low-concentration Li-containing sulfuric acid aqueous solution, multistage impurity removal and Li concentration processes are performed. Battery-grade Li₂CO₃ or LiOH must have a purity of 99.5% or more, and in order to obtain a material having the corresponding purity, high extraction cost is required and there is a problem of reducing the Li recovery rate, and thus research on a method for solving the above problem is required. On the other hand, in order to extract Li in a Li-containing ore such as spodumene containing Li in an amount of about 1 to 3%, after heat treatment at 900°C or higher, when impurity removal is performed after leaching in sulfuric acid, a large amount of precipitates is generated, wherein precipitates corresponding to 97 to 99% of the input amount are generated, and high environmental treatment costs are required to landfill the precipitates.

As described above, in the case of conventional dry or wet processes, there is a problem that the recovery rate of lithium is low, and there is an excessive economic problem in order to increase the recovery rate of lithium.

Most reaction methods convert waste batteries into black mass, and at this time, aluminum and copper current collectors are separated as much as possible and processed into a powder form of 0.1 mm or less, followed by high-temperature treatment. At this time, lithium hardly reacts with aluminum, and appears to react with carbon of the black mass or react with fluorine.

### [DETAILED DESCRIPTION OF THE INVENTION]

### [Technical Problem]

A composition for recovering a lithium compound according to one embodiment of the present invention is to provide a composition having a high lithium content by causing lithium in a waste battery to react with high purity with aluminum or aluminate, which is a current collector or a positive electrode material of a battery.

A battery processing method according to another embodiment of the present invention provides a waste battery processing method for obtaining the composition for recovering a lithium compound having the above-described advantages.

### [Technical Solution]

A composition for recovering a lithium compound according to one embodiment of the present invention is a composition including a lithium compound recovered from a waste battery, and may have an angular shape. Specifically, when a polygon is drawn using lines parallel to an outer side of the composition for recovering a lithium compound, the composition may have at least one angle of 90° or less at which two outer lines contact each other.

In one embodiment, the composition for recovering a lithium compound may have a size in which a length of a major axis among a width, a length, and a height is 0.02 mm or more. In one embodiment, a content of lithium (Li) may be 4 to 35 wt% based on 100 wt% of the entire composition for recovering a lithium compound.

In one embodiment, the composition may include at least one of LiAlO₂, Li₅AlO₄, LiAl₅O₈, Li₂CO₃, LiF, Li₃PO₄, Li₂SiO₃, Li₄SiO₄, and Li₂Si₂O₅. In one embodiment, the composition for recovering a lithium compound may satisfy the following Formula 1. <Formula 1> 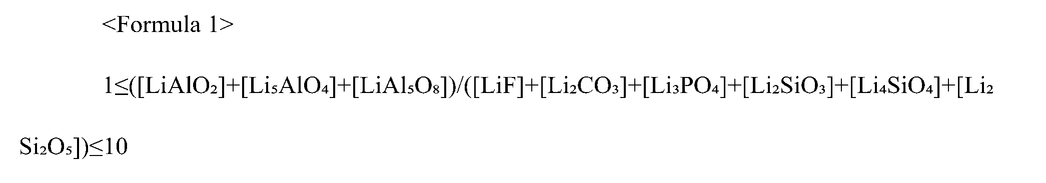 1≤([LiAlO2]+[Li5AlO4]+[LiAl5O8])/([LiF]+[Li2CO3]+[Li3PO4]+[Li2SiO3]+[Li4SiO4]+[Li2 Si2O5])≤10 wherein [LiAlO₂], [Li₅AlO₄], [LiAl₅O₈], [LiF], [Li₂CO₃], [Li₃PO₄], [Li₂SiO₃], [Li₄SiO₄], and [Li₂Si₂O₅] mean crystalline phase ratios of LiAlO₂, Li₅AlO₄, LiAl₅O₈, LiF, Li₂CO₃, Li₃PO₄, Li₂SiO₃, Li₄SiO₄, and Li₂Si₂O₅, respectively.

In one embodiment, the composition for recovering a lithium compound may satisfy the following Formula 2. <Formula 2> $0.1 \leq IA / IB \leq 1.5$ wherein IA is a peak intensity value at 2θ = 21°±0.5° of a LiAlO₂ product, and IB is a peak intensity value at 2θ = 32.6°±0.4° of the LiAlO₂ product.

In one embodiment, the composition for recovering a lithium compound may satisfy the following Formula 3. <Formula 3> $\left[Al\right] = 0.745 \times \left[Li\right] \pm 0.3$ wherein [Al] and [Li] mean the number of moles of Al and Li in a lithium-containing compound, respectively.

A battery processing method for a composition for recovering a lithium compound according to another embodiment of the present invention includes preparing a battery including lithium (Li) and aluminum (Al), shredding the battery into battery shredded material, and high-temperature heat-treating the shredded battery shredded material, wherein the high-temperature heat-treating includes heat-treating in a temperature range of 600 to 1,500°C, and in the preparing of the battery, lithium and aluminum in the battery satisfy the following Formula 4. <Formula 4> $0.1 \leq \left[Li\right] / \left[Al\right] \leq 1.0$ wherein, in Formula 4, [Li] and [Al] mean weight ratios (wt%) of lithium and aluminum in the battery.

In one embodiment, in the shredding of the battery into the battery shredded material, the battery shredded material may have a structure in which a positive electrode material including a current collector and a negative electrode material including carbon are stacked. In one embodiment, in the stacked structure, the positive electrode material and the negative electrode material may maintain an interval of 0.01 to 5 mm.

In one embodiment, in the shredding of the battery into the battery shredded material, the battery shredded material may have a tap density of 200 to 1000 kg/m³. In one embodiment, after the high-temperature heat-treating of the shredded battery shredded material, the method may further include pulverizing a high-temperature heat-treated lithium-containing composition.

In one embodiment, the shredding of the battery may be performed to have a size of 5 to 50 mm. In one embodiment, after the high-temperature heat-treating of the shredded battery shredded material, the high-temperature heat-treated lithium-containing composition may be leached and recovered with an acidic solution having a pH of 1 to 5.

In one embodiment, in performing the shredding of the battery, a distribution may be controlled such that a ratio of a material having a size of 0.1 to 100 mm is 60% or more in the entire raw material.

### [Advantageous Effects]

The composition for recovering a lithium compound according to one embodiment of the present invention can provide a lithium-containing composition having an excellent lithium recovery rate by having an angular shape.

In the battery processing method according to another embodiment of the present invention, in the preparing of the battery, by controlling the weight ratio of lithium and aluminum in the battery, a lithium-containing composition having a high lithium content can be generated, thereby increasing the recovery rate of lithium.

### [BRIEF DESCRIPTION OF THE DRAWINGS]

FIG. 1 is an SEM photograph of a composition for recovering valuable metals according to one embodiment of the present invention.
FIG. 2 shows a reaction ratio of lithium and aluminum in a composition for recovering a lithium compound.
FIG. 3 is a photograph of battery shredded material for battery processing according to one embodiment of the present invention.
FIGS. 4 and 5 are photographs showing a stacked structure of battery shredded material according to one embodiment of the present invention.
FIGS. 6A and 6B are graphs showing XRD peak result values of a lithium compound.
FIG. 7 shows a leaching rate in sulfuric acid relative to a Si content in a lithium compound.
FIG. 8 is a photograph showing forms of reactants according to sizes of raw materials of the present invention.
FIG. 9A shows a spherical shape of a nickel alloy, FIG. 9B is a photograph showing a shape of a lithium compound, and FIG. 9C is a photograph according to various shapes of lithium compounds.

### [MODE FOR CARRYING OUT THE INVENTION]

Terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the context clearly indicates otherwise. As used in the specification, the term "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

In addition, in the present specification, % means wt% unless otherwise specified.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense.

Hereinafter, embodiments of the present invention will be described in detail. However, these are presented as examples, and the present invention is not limited thereby, and the present invention is defined only by the scope of claims to be described below.

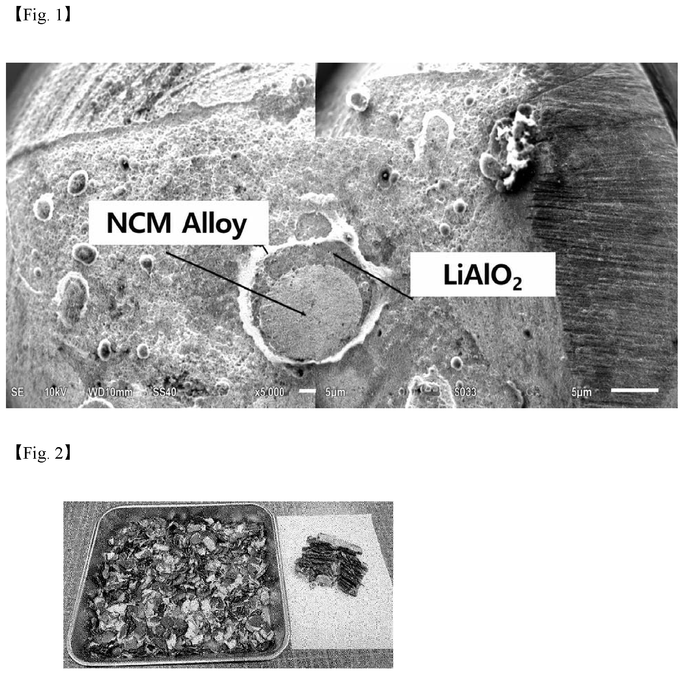

FIG. 1 is an SEM photograph of a composition for recovering valuable metals according to one embodiment of the present invention.

Referring to FIG. 1, the composition for recovering valuable metals according to one embodiment of the present invention includes a first compound in a core-shell shape including a core portion and a shell portion disposed on the core portion, a second compound including lithium, and carbon. The composition for recovering valuable metals may be a composition obtained through a battery processing method as described below and may be recovered from a waste battery.

The core portion in the first compound may include an alloy for recovering valuable metals. In the present invention, the valuable metals may mean expensive metal components included in a battery, and may mean nickel, cobalt, manganese, aluminum, copper, and lithium. The core portion of the composition for recovering valuable metals may be recovered from a positive electrode material component in a waste battery.

The shell portion in the first compound is disposed on the core portion and may include a lithium compound. Specifically, when valuable metals are recovered from a waste battery, the valuable metals in the waste battery are present in the form of oxides, and reduction occurs by graphite in the negative electrode material through a high-temperature heat treatment process. At this time, a copper current collector is melted and present in a liquid state and may serve to agglomerate reduced valuable metals. The copper current collector and the aluminum current collector perform a partial reduction reaction with a positive electrode material oxide, and the remainder reacts with lithium, so that a compound in the form of an oxide including lithium may remain.

The lithium compound coupled to and disposed on the shell portion of the core-shell-shaped material may be separated from the core portion through pulverization, as in the battery processing method to be described below. The lithium compound separated from the shell portion in the first compound and the second compound including lithium, which is generated separately from the core-shell-shaped material in the composition for recovering valuable metals, may have the same components and characteristics, and thus at least one of the lithium compound separated from the shell portion in the first compound and the second compound including lithium may be defined as the composition for recovering a lithium compound.

In one embodiment, the composition for recovering a lithium compound may have an angular shape. Specifically, the composition for recovering a lithium compound may have a sharp shape having at least one region in which, when a polygon is drawn using lines parallel to an outer side of the composition for recovering a lithium compound from an SEM observation at a magnification of ( ) times, an angle at which two outer lines meet is 90° or less.

In the battery processing method, the shape may be formed by controlling the oxygen content to a trace amount and performing heat treatment, whereby the composition for recovering a lithium compound is bonded to the aluminum current collector and Li-Al-O is covalently bonded. Since the composition for recovering a lithium compound has an angular shape, there is an advantage that decomposition of the lithium compound coupled to the shell portion is easy in a subsequent process, and there is an advantage that the recovery rate of lithium is increased therefrom.

In one embodiment, the content of lithium (Li) in the composition for recovering a lithium compound may be 4 to 35 wt%, specifically 4 to 15 wt%, based on 100 wt% of the entirety.

As the content of Li in the composition for recovering a lithium compound satisfies the above-described range, a composition including a lithium-containing compound, which has a high lithium content and an excellent lithium recovery rate, can be satisfied. When the content of Li is outside the upper limit value of the above-described range, there is a problem that the Li₂O content increases and a large amount of compounds that are difficult to recover due to water solubility issues are generated, thereby reducing the lithium recovery rate. When the content of Li is outside the lower limit value of the above-described range, there is a problem that the lithium recovery rate is low and there is no utility value.

In one embodiment, the composition for recovering a lithium compound may include at least one of LiAlO₂, Li₅AlO₄, LiAl₅O₈, Li₂CO₃, LiF, Li₃PO₄, Li₂SiO₃, Li₄SiO₄, and Li₂Si₂O₅. In one embodiment, the composition for recovering a lithium compound may include lithium aluminum oxide.

The lithium compound in the composition for recovering a lithium compound may be, for example, lithium oxide. The lithium-aluminum oxide may be implemented in the form of an oxide by physical or chemical bonding of lithium included in the composition.

In one embodiment, the lithium compound in the composition for recovering a lithium compound may include lithium aluminum oxide. Specifically, the content of lithium aluminum oxide may be 45.0 to 97.0 wt% based on 100 wt% of the composition for recovering a lithium compound. Specifically, the content may be 45.0 to 80.0 wt%.

When the content of the lithium aluminum oxide is outside the upper limit value of the above-described range, it means that the reaction temperature has been treated at an excessively high temperature and all lithium has reacted with aluminum, and there is a possibility that lithium itself has been volatilized and gasified. This has high lithium aluminum characteristics but has a problem in terms of the overall recovery rate. When the content of the lithium aluminum oxide is outside the lower limit value of the above-described range, there is a high possibility that lithium did not react with aluminum oxide, or there is a problem that carbon or a nickel alloy may have been mixed therein due to the small size of the lithium compound.

In one embodiment, Li₃PO₄ may be included in an amount of 10 wt% or less based on 100 wt% of the entire composition. The Li₃PO₄ may be included in an amount of 5 wt% or less, specifically 3 wt% or less, and more specifically 0.1 to 0.7 wt%, based on 100 wt% of the entire composition. As the Li₃PO₄ content satisfies the above-described range, it is possible to prevent the Li recovery rate from decreasing due to problems such as leaching behavior caused by pH change due to PO₃⁻ anions during acid leaching and generation of LiOH during impurity removal. As the Li₃PO₄ content satisfies the above-described range, it is possible to prevent the Li recovery rate from decreasing due to problems such as leaching behavior caused by pH change due to PO₃⁻anions during acid leaching and generation of LiOH during impurity removal.

In one embodiment, the composition for recovering a lithium compound may satisfy the following Formula 1. <Formula 1> $\begin{matrix}1 \leq \\ \left(\left[{LiAlO}_{2}\right]+\left[{Li}_{5}{AlO}_{4}\right]+\left[{LiAl}_{5}{O}_{8}\right]\right) / \left(\left[LiF\right]+\left[{Li}_{2}{CO}_{3}\right]+\left[{Li}_{3}{PO}_{4}\right]+\left[{Li}_{2}{SiO}_{3}\right]+\left[{Li}_{4}{SiO}_{4}\right]+\left[{Li}_{2}{Si}_{2}{O}_{5}\right]\right) \leq \\ 10\end{matrix}$ wherein [LiAlO₂], [Li₅AlO₄], [LiAl₅O₈], [LiF], [Li₂CO₃], [Li₃PO₄], [Li₂SiO₃], [Li₄SiO₄], and [Li₂Si₂O₅] mean crystalline phase ratios of LiAlO₂, Li₅AlO₄, LiAl₅O₈, LiF, Li₂CO₃, Li₃PO₄, Li₂SiO₃, Li₄SiO₄, and Li₂Si₂O₅, respectively.

Formula 1 is a relational expression for crystalline phase ratios of lithium-containing compounds in a composition including lithium-containing compounds, which are reactants generated through a high-temperature reduction reaction to be described below. Formula 1 may satisfy 1.0 to 10.0, specifically 2.0 to 8.5, and more specifically 2.80 to 7.40.

By satisfying Formula 1, the composition including a lithium-containing compound, which is the composition for recovering a lithium compound of the present invention, has an advantage of improving the actual yield of lithium by promoting generation of crystalline phases of LiAlO₂, Li₅AlO₄, and LiAl₅O₈. When the content of Formula 1 is not satisfied, specifically, when the value is lower than the content of Formula 1, problems may occur, such as a problem that the actual yield of lithium is reduced as LiF is vaporized, a problem that an acid leaching rate is lowered due to an increase in Si content, a problem that the Li recovery rate is reduced due to leaching behavior caused by pH change due to PO₃⁻ anions during acid leaching and generation of LiOH during impurity removal, and a problem that the Li recovery rate is reduced due to mass generation of compounds that are difficult to recover due to water solubility issues in the case of Li₂CO₃ and LiF.

In one embodiment, the composition for recovering a lithium compound may satisfy the following Formula 1. <Formula 2> $0.1 \leq IA / IB \leq 1.5$ wherein, in Formula 2, IA is a peak intensity value at 2θ = 21°±0.5° of a LiAlO₂ product, and IB is a peak intensity value at 2θ = 32.6°±0.4° of the LiAlO₂ product.

Formula 2 is a relational expression for a ratio of peak intensity values at specific angles of LiAlO₂, which is a lithium oxide in the composition for recovering a lithium compound, which is a reactant generated through a high-temperature reduction reaction to be described below. Formula 2 may satisfy 0.1 to 1.5, specifically 0.3 to 1.5, and more specifically 0.7 to 1.3.

When Formula 2 is outside the lower limit value of the above-described range, an LiAl₇O₁₁ phase having a high Al₂O₃ content is excessively generated, and accordingly, the Li leaching rate is lowered, resulting in a problem of reduced lithium recovery rate. When Formula 2 is outside the upper limit value of the above-described range, a large amount of Li₂O is generated, and as the temperature rises, lithium is vaporized, resulting in a problem of reduced lithium recovery rate.

In one embodiment, LiAlO₂ may include, as XRD peaks, at least one of 20.5 to 21.5°, 29.0 to 29.5°, 31.5 to 32.0°, 32.2 to 33.0°, 60.5 to 61.5°, and 70.0 to 72.0°. Li₅AlO₄ may include, as XRD peaks, at least one of 19.5 to 20.2° and 21.6 to 22.2°.

The LiAl₅O₈ composition may include, as XRD peaks, at least one of 15.0 to 17.4°, 24.2 to 26.1°, 31.4 to 33.1°, 36.2 to 40.3°, 46.1 to 47.3°, 61.1 to 63.4°, and 66.2 to 68.7°. The LiF composition may include, as XRD peaks, at least one of 37.5 to 40.2°, 43.9 to 46.5°, and 64.5 to 66.5°.

The Li₃PO₄ composition may include, as XRD peaks, at least one of 29.2 to 40.1° and 52 to 77.1°. The Li₂SiO₃ composition may include, as XRD peaks, at least one of 17.7 to 20.1°, 26.1 to 29.5°, 32.2 to 36.2°, and 37.6 to 39.7°. The Li₄SiO₄ composition may include, as XRD peaks, at least one of 16.2 to 18.3°, 21.4 to 25.2°, 34.2 to 39.7°, and 59.2 to 63.4°.

The Li₂Si₂O₅ composition may include, as XRD peaks, at least one of 16.2 to 18.3°, 21.4 to 25.2°, 34.2 to 39.7°, and 59.2 to 63.4°. The Li₂CO₃ composition may include, as XRD peaks, at least one of 24.0 to 26.0°, 27.0 to 29.0°, 34.0 to 36.0°, and 37.0 to 39.0°.

In one embodiment, the composition for recovering a lithium compound may satisfy the following Formula 3. <Formula 3> $\left[Al\right] = 0.745 \times \left[Li\right] \pm 0.3$ wherein [Al] and [Li] mean the number of moles of Al and Li, respectively.

Through Formula 3, it was confirmed that elements having strong oxidizing power at high temperature, such as Li and Al, generate reaction products such as LiAlO₂, Li₅AlO₄, and LiAl₅O₈, which are stable at high temperature. Formula 3 may be included within a range of [Al] = 0.745 × [Li] + 0.3 as an upper limit value and [Al] = 0.745 × [Li] - 0.3 as a lower limit value. When Formula 3 is not satisfied, there is a problem that generation of lithium aluminum oxide having strong oxidizing power at high temperature is reduced.

FIG. 2 shows a reaction ratio of lithium and aluminum in the composition for recovering a lithium compound.

Referring to FIG. 2, it can be confirmed that the numbers of moles of lithium and aluminum satisfy the range of Formula 3.

A battery processing method according to another embodiment of the present invention includes preparing a battery, shredding the battery into battery shredded material, and high-temperature heat-treating the shredded battery shredded material.

In the preparing of the battery, the battery may be a method for processing various types of batteries including lithium ions, and the battery may be, for example, a lithium secondary battery separated from an automobile, a secondary battery separated from an electronic device such as a mobile phone, a camera, or a notebook computer, and specifically a lithium secondary battery. More specifically, the battery utilizes a waste battery and thus has an environmentally friendly advantage.

In one embodiment, in the preparing of the battery, the battery may include lithium (Li) and aluminum (Al). Since lithium and aluminum coexist in the battery, in a product generated after battery processing, lithium and aluminum may be disposed as a physically and/or chemically bonded material.

In one embodiment, the preparing of the battery may include freezing the battery. The freezing of the battery is a step for stabilizing an electrolyte solution in the battery and has an advantage of reducing a risk of fire in the battery shredding step to be described below.

The freezing of the battery is performed at a temperature sufficient to freeze an electrolyte included in the battery. Specifically, the freezing may be performed, for example, in a temperature range of -150 to -20°C. More specifically, the temperature range may be -150 to -50°C, and still more specifically -80 to -60°C.

When the battery is frozen in the above temperature range, a voltage remaining slightly inside the battery, for example, a voltage of about 2 V to 3 V, decreases close to 0 V, and thus even if a short circuit in which a positive electrode and a negative electrode directly contact each other occurs, a battery reaction does not occur, so that the battery temperature does not increase and gas generation and combustion of the electrolyte do not occur. In addition, since the electrolyte is in a frozen state or a state in which vaporization is suppressed, the mobility of lithium ions is very low, electrical conduction characteristics due to the movement of the lithium ions can be remarkably reduced, and because vaporization of the electrolyte solution does not occur, combustible gases such as ethylene, propylene, and hydrogen may not be generated.

When the freezing process is outside the above temperature range, for example, when cooling is performed at a temperature higher than -60°C, the voltage remaining inside the battery is not reduced to 0 V, and thus a battery reaction due to a short circuit may occur, and the electrolyte is not completely frozen, which is not appropriate. In addition, when cooling is performed to - 150°C, the electrolyte is sufficiently frozen and the voltage inside the battery is also reduced to 0 V, and thus there is no need to lower the temperature below this. As described above, the battery processing method has an advantage of preventing a risk of fire that may occur in the battery shredding process by including the step of freezing a battery such as a lithium secondary battery before shredding the battery.

In one embodiment, in the preparing of the battery, the weights of lithium and aluminum in the battery may satisfy the following Formula 4. <Formula 4> $0.1 \leq \left[Li\right] / \left[Al\right] \leq 1.0$ wherein, in Formula 4, [Li] and [Al] mean weight ratios (wt%) of lithium and aluminum in the battery.

Formula 4 may be an index of a raw material state in the battery preparation step. Formula 3 may satisfy 0.1 to 1.0, and specifically 0.2 to 0.6.

When Formula 4 is outside the upper limit value of the above-described range, there is a problem that unreacted aluminum is generated. When Formula 4 is outside the lower limit value of the above-described range, there is a problem that unreacted lithium is generated.

The shredding of the battery may mean a process of applying impact or pressure to the battery so that a part of the battery is separated from the battery. In one embodiment, the shredding of the battery may mean all of a process of pulverizing the battery, a process of cutting the battery, a process of compressing the battery, and a combination thereof. Specifically, the shredding may include all processes capable of destroying the battery and obtaining shredded material having a small size.

In one embodiment, the shredding of the battery may include all processes of compressing the prepared battery or applying an external force such as shear force or tensile force to destroy the battery. The shredding of the battery may be performed using, for example, a shredder.

In one embodiment, the shredding of the battery may be performed at least once. Specifically, the shredding may be performed continuously or discontinuously at least once.

In one embodiment, the shredding of the battery may be performed to have a size of 5 to 50 mm. Specifically, the shredding of the battery may be performed to have a size of 10 to 30 mm. When the battery is shredded within the above range, the size of the reactant recovered through a thermal reduction process is formed to be greater than 0.1 mm, so that a magnetic valuable metal recovery alloy, a lithium compound, and carbon can be easily separated.

When the shredding of the battery is performed such that shredded material larger than the upper limit value of the above-described range is generated, there is a problem that the size of lithium aluminate increases or an unreacted portion remains in a central portion. When the shredding of the battery is performed such that shredded material larger than the lower limit value of the above-described range is generated, the size of the battery shredded material as a raw material is excessively small and the size of a reactant generated from the battery shredded material is similar to the size of carbon, and thus separation from the carbon is not easy, thereby reducing the lithium recovery rate.

In one embodiment, in performing the shredding of the battery, the distribution of raw materials may be controlled such that a ratio of materials having a size of 0.1 to 100 mm according to the shredding of the battery is 60% or more in the entire raw material. When the distribution of the raw materials is excessively smaller than the above-described range, there is a problem that the size of the raw material after reaction becomes excessively small, making it difficult to separate non-magnetic carbon and a lithium compound. When the distribution of the raw materials is excessively larger than the above-described range, a large number of voids occur in the raw material, causing a problem that heat transfer characteristics are lowered, and thus an excessive high-temperature holding time is required to process the reactant, resulting in a problem that reaction efficiency is reduced.

In one embodiment, the shredding of the battery may be performed under a condition of supplying an inert gas, carbon dioxide, nitrogen, water, or a combination thereof, or under a vacuum atmosphere condition of 100 torr or less. For example, when the process of freezing the battery is performed by cooling in a temperature range of -60 to -20°C, when the process is performed under the above-described conditions, oxygen supply can be suppressed to prevent the electrolyte from reacting with oxygen, explosion resulting therefrom can be prevented, vaporization of the electrolyte solution can be suppressed, and combustible gases such as ethylene, propylene, or hydrogen may not be generated.

In one embodiment, in the shredding of the battery, the battery shredded material may have a structure in which a positive electrode material including a current collector and a negative electrode material including carbon are stacked. Specifically, the battery shredded material may have a plurality of stacked structures in which a positive electrode material, a separator, and a negative electrode material are sequentially stacked.

In one embodiment, in the stacked structure, the positive electrode material and the negative electrode material may maintain an interval of 0.01 to 5 mm. Specifically, the interval may be maintained at 0.1 to 3 mm.

As the interval satisfies the above-described range, there is an advantage that reaction efficiency is improved. When the interval is outside the upper limit value of the above-described range, there is a problem that aluminum and lithium do not react and become lithium carbon or another compound or are volatilized.

In one embodiment, the shredding of the battery may be performed such that the maximum size of the battery shredded material becomes 100 mm or less. Specifically, the size of the battery shredded material may be 50 mm or less. When the maximum size of the battery shredded material is 100 mm or more, the heat generation temperature caused by instability as the battery shredded material is shredded increases to a temperature region of 120°C, which is an average vaporization temperature of the electrolyte solution, and a safety problem such as fire occurrence may occur.

In one embodiment, in the shredding of the battery into the battery shredded material, the battery shredded material may have a tap density of 200 to 1,000 kg/m³. Specifically, the tap density may be 300 to 700 kg/m³.

When the tap density is outside the upper limit value of the above-described range, there is a problem that the content of fine powder of 0.1 mm or less in the raw material increases, making it difficult to separate carbon and a lithium compound from non-magnetic materials of the final product. When the tap density is outside the lower limit value of the above-described range, there is a problem that the reaction rate is slowed because there are many voids in the reaction state.

The high-temperature heat-treating of the shredded battery shredded material may include introducing the battery shredded material into a furnace capable of raising the battery shredded material to a high temperature and raising the battery shredded material to a temperature equal to or higher than a melting point. The battery shredded material may include, for example, valuable metals such as Ni, Co, Mn, and Li. The high-temperature heat treatment may involve heat treatment conditions for performing a high-temperature reduction reaction without passing through a melting step of the battery.

In one embodiment, the high-temperature heat-treating of the battery shredded material may be performed in a gas atmosphere of at least one of an inert gas, carbon dioxide, carbon monoxide, a hydrocarbon gas, and oxygen. The inert gas may include, for example, at least one of argon and nitrogen. There is an advantage that the recovery rate of valuable metal elements contained in the battery shredded material can be increased by performing a reduction reaction of the shredded material in the gas atmosphere.

In one embodiment, the high-temperature heat-treating of the Ni-, Co-, Mn-, and Li-containing battery shredded material may be performed in a gas atmosphere including at least one of an inert gas, carbon dioxide, carbon monoxide, and a hydrocarbon gas; and oxygen. In one embodiment, the high-temperature heat-treating may be performed in a gas atmosphere having an oxygen concentration in a range of 0.1 to 2.0 vol%. Specifically, the oxygen concentration may be in a range of 0.4 to 1.2 vol%.

When the oxygen concentration is outside the upper limit value of the above-described range, as the oxygen concentration increases, the reaction Li₂O + C + O₂(g) = Li₂CO₃ is promoted, but at the same time, there is a problem that LiAlO₂ and Li₅AlO₄ are reduced. Specifically, when the oxygen concentration is outside the upper limit value of the above-described range, carbon dioxide is excessively formed in the reduction reaction process and is gasified and lost together with lithium, or Li₂CO₃(s) is generated excessively, causing a problem that recovery by acid leaching is difficult. When the oxygen concentration is outside the lower limit value of the above-described range, there is a problem that the lithium recovery rate decreases.

In one embodiment, the high-temperature heat-treating of the battery shredded material may be performed in a range of 600 to 1,500°C. Specifically, the high-temperature heat-treating may be performed in a range of 900 to 1,500°C, more specifically in a range of 1,100 to 1,500°C, and still more specifically in a range of 1300 to 1500°C. In the high-temperature heat-treating of the battery shredded material, as the temperature increases, Li₅AlO₄ is generated due to the reaction LiAlO₂(s)+2Li₂CO₃(s)=Li₅AlO₄+2CO₂(g), but the vaporization reaction of LiF(g) is promoted, and when performed within the above-described range, the yield of lithium can be improved.

When the temperature is outside the upper limit value of the above range, there is a problem of lithium loss due to vaporization of lithium. Specifically, when the temperature is outside the upper limit value of the above range, as the vaporization reaction of LiF(g) is excessively promoted, the lithium recovery rate is reduced due to loss of lithium.

When the temperature is outside the lower limit value of the above range, sintering and reduction of alloy elements are not smoothly performed, and a stabilized lithium-containing compound cannot be formed, so that there is a problem that it is difficult to recover a stabilized compound during future recovery of a lithium compound. Specifically, when the temperature is outside the lower limit value of the above range, MnO among Li-containing Ni, Co, and Mn oxides in the positive electrode material is not dissociated, and MnAl₂O₄ is generated due to the reaction MnO(s)+2Al(s)+3/2O₂=MnAl₂O₄(s), thereby reducing the lithium concentration in the lithium compound and reducing the lithium recovery rate.

In one embodiment, after the high-temperature heat-treating of the shredded battery shredded material, the method may further include pulverizing the high-temperature heat-treated lithium-containing composition. Specifically, the pulverizing of the high-temperature heat-treated lithium-containing composition may be a step of separating, in the lithium-containing composition, a core portion including valuable metals and a lithium-containing compound by physical external force.

By including the pulverizing of the high-temperature heat-treated lithium-containing composition, the core portion including valuable metals and the shell portion composed of the lithium-containing compound can be separated, and lithium included in the shell portion can be additionally recovered. By additionally recovering lithium in the shell portion, the recovery rate of finally recovered lithium can be increased.

In one embodiment, the battery processing method may include, after the high-temperature heat treatment step, separating a nickel- or iron-containing alloy through magnetic separation and then obtaining a composition including a remaining lithium compound. Specifically, the battery processing method may include, after the high-temperature heat treatment step, magnetically separating the heat-treated result using a magnetic force intensity of 1000 G or more. More specifically, the magnetic force intensity may be 1500 G or more.

Specifically, after the high-temperature heat treatment step, the heat-treated product may include a composition including a lithium compound and powder including a nickel alloy, for example, black powder. By separating the nickel- or iron-containing alloy included in the black powder through magnetic separation, the composition including a lithium compound can be separated and obtained.

In one embodiment, the battery processing method may include, after the high-temperature heat treatment step, particle-size separating a lithium compound having a maximum value of a major-axis length of 20 µm or more among the heat-treated result. Specifically, among the heat-treated result, a lithium compound having a maximum value of a major-axis length among a width, a length, and a height of 20 µm or more may be separated through particle-size separation. Through the particle-size separation, a lithium compound can be separated by a simple process, thereby increasing the recovery rate of lithium.

In one embodiment, the battery processing method may include, after the high-temperature heat treatment step, specific-gravity separating, with respect to the heat-treated result, a lithium compound smaller than 3 based on a bulk specific gravity of 3. Through the specific-gravity separation method, the lithium compound can be easily separated, thereby increasing the recovery rate of lithium.

In one embodiment, the battery processing method may further include recovering lithium by leaching the composition including a lithium compound with an acidic solution. The acidic solution may satisfy a pH of 4 or less.

When the pH is 4 or more, there is a problem that a stabilized lithium-containing compound cannot secure a target precipitation rate. The acidic solution may be, for example, a solution such as sulfuric acid. Specifically, the composition including the lithium compound may be leached with the acidic solution to dissolve metals such as aluminum in the lithium compound, thereby recovering lithium.

In one embodiment, the leaching rate of the composition including the lithium-containing compound in sulfuric acid may be 95% or more. Specifically, the leaching rate of the composition including the lithium-containing compound in sulfuric acid may be 96% or more. By increasing the leaching rate of the composition including the lithium-containing compound, there is an advantage that the lithium recovery rate can be maximized.

Hereinafter, preferred Examples and Comparative Examples of the present invention will be described. However, the following Examples are merely preferred embodiments of the present invention, and the present invention is not limited to the following Examples.

### <Experimental Example> - Control of Waste Battery Conditions

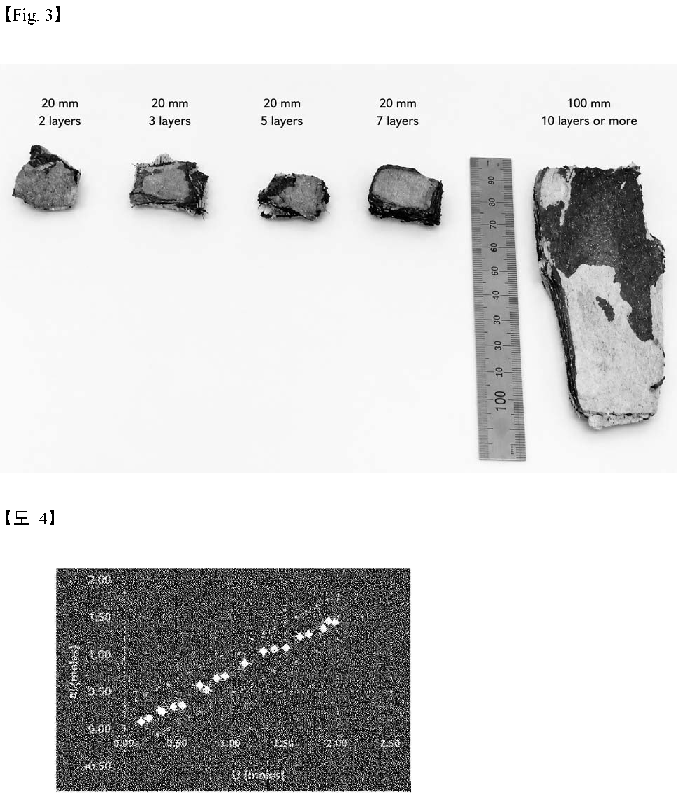

FIG. 3 is a photograph of battery shredded material for battery processing according to one embodiment of the present invention.

Referring to FIG. 3, the battery shredded material may be shredded through a shredding step such that the longest length among a width and a length is 100 mm or less. Specifically, the optimal size of the battery shredded material may be 10 to 40 mm as the longest length among the width and the length. This is to prevent a possibility of fire when shredding the battery.

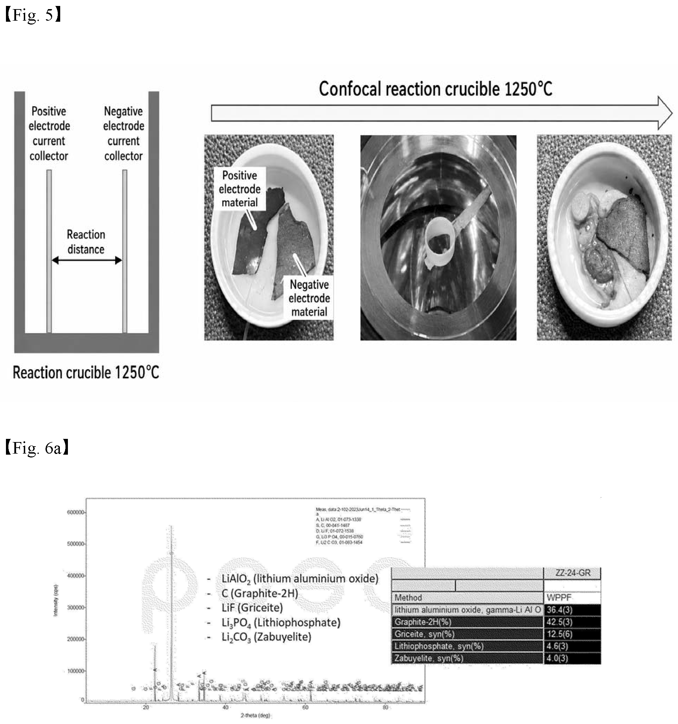

FIGS. 4 and 5 are photographs showing a stacked structure of battery shredded material according to one embodiment of the present invention.

Referring to FIGS. 4 and 5, when a reaction distance between a positive electrode current collector and a negative electrode current collector is less than 10 mm, when the battery shredded material is heat-treated and reduced, lithium reacts with aluminum, so that a composition in a form in which a lithium compound is bonded to a surface of a valuable metal recovery alloy can be obtained. Specifically, at 10 mm or more, lithium in aluminum, a positive electrode material, an electrolyte solution, and a negative electrode material does not react with aluminum and is volatilized, thereby causing a problem that the purity of lithium reacting with aluminum is reduced.

### <Experimental Example 1>

A shredded raw material, which is an electric vehicle waste battery including a positive electrode material including lithium ions, a graphite negative electrode material, an aluminum current collector, a separator, an electrolyte solution, and a copper current collector, was prepared. The waste battery was shredded using shredding equipment such that the longest length among a width and a length was 100 mm or less.

Shredding was performed by controlling the reaction distance between the aluminum current collector and the copper current collector in the waste battery to be shorter than 1 mm and controlling the ratio of Li(wt%)/Al(wt%) in the waste battery to 1.3. Thereafter, the shredded battery shredded material was heated to 1250°C to obtain a composition for recovering valuable metals, and then the content of the lithium-containing compound in the composition for recovering valuable metals was measured.

### <Experimental Example 2>

A composition for recovering valuable metals was obtained in the same manner as in Experimental Example 1, except that the reaction distance between the aluminum current collector and the copper current collector was 3 mm and the ratio of Li(wt%)/Al(wt%) in the waste battery was controlled to 1.2.

### <Experimental Example 3>

A composition for recovering valuable metals was obtained in the same manner as in Experimental Example 1, except that the reaction distance between the aluminum current collector and the copper current collector was 5 mm and the ratio of Li(wt%)/Al(wt%) in the waste battery was controlled to 0.2.

### <Experimental Example 4>

A composition for recovering valuable metals was obtained in the same manner as in Experimental Example 1, except that the reaction distance between the aluminum current collector and the copper current collector was 10 mm and the ratio of Li(wt%)/Al(wt%) in the waste battery was controlled to 0.03.

### <Experimental Example 5>

A composition for recovering valuable metals was obtained in the same manner as in Experimental Example 1, except that the reaction distance between the aluminum current collector and the copper current collector was 15 mm and the ratio of Li(wt%)/Al(wt%) in the waste battery was controlled to 0.01.

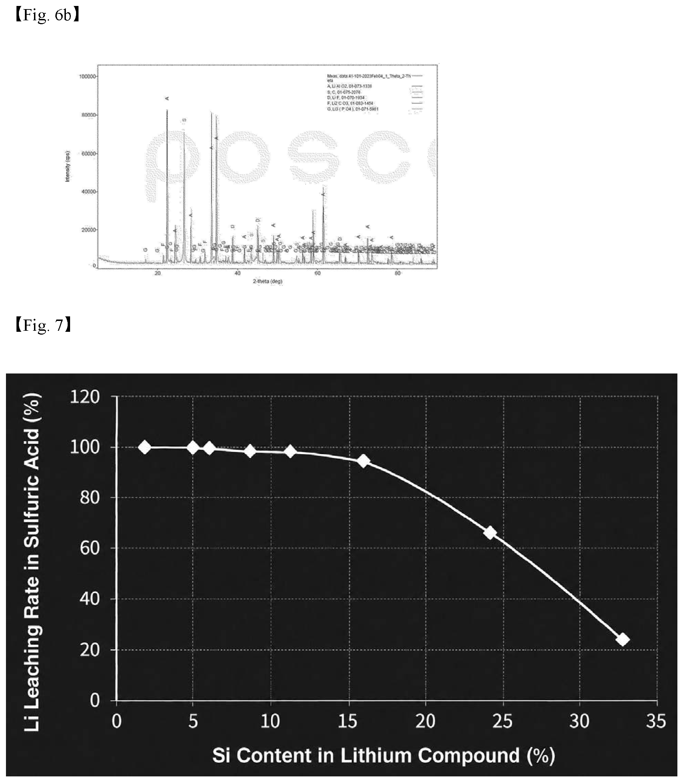

FIGS. 6A and 6B are graphs showing XRD peak result values of a lithium compound.

The reaction distance in Table 1 below is a distance measured between the aluminum current collector and the copper current collector.

Li(wt%)/Al(wt%) was tested using confocal test equipment, and the analysis was measured through XPS (X-ray Photoelectron Spectroscopy).

**[Table 1]**

| | Waste Battery Conditions | | Lithium Aluminum Oxide [wt%] | **Lithium Carbonate** [wt%] | LiF[wt%] | Others[wt%] |
|---|---|---|---|---|---|---|
| | Reaction Distance [mm] | Li(wt%)/A l(wt%) | LiAlO₂ | Li₂CO₃ | LiF | Graphite, Cu, |
| Experiment al Example 1 | <1 | 1.3 | 36.4 | 4.0 | 12.5 | 47.1 |
| Experiment al Example 2 | 3 | 1.2 | 36.1 | 4.0 | 12.1 | 51.6 |
| Experiment al Example 3 | 5 | 0.2 | 20.3 | 6.2 | 12.9 | 60.6 |
| Experiment al Example 4 | 10 | 0.03 | 4.1 | 12.1 | 14.5 | 69.3 |
| Experiment al Example 5 | 15 | 0.01 | 2.6 | 15.2 | 15.5 | 66.7 |

Referring to Table 1 and FIGS. 6A and 6B, when aluminum is present in a small amount, the ratio of lithium aluminum oxide gradually decreases. At this time, as the amount of aluminum decreased, the ratio reacting with fluorine slightly increased, but because the amount of fluorine is difficult to control, the ratio of lithium reacting with fluorine was shown to be limited to a maximum of 15.5%. It appears that lithium carbonate also increases in weight ratio when maintained at a low temperature for a long time if the amount of aluminum is small, but in this experiment, because the process was performed around 1,250°C in an oxygen atmosphere of 0.1% or less, the weight ratio of lithium carbonate also did not continuously increase. This was determined to have been expressed because remaining lithium was vaporized. Specifically, as in the Examples, when the reaction distance between the positive electrode current collector and the negative electrode and current collector was less than 10 mm, it was confirmed that the purity of lithium reacting with aluminum was high and the content of lithium aluminum oxide was high. In Table 1, the reason why the XRD peak value does not reach 100% was determined to be that lithium was partially changed into a form such as vaporized or lithium phosphate or lithium fluoride.

FIG. 7 shows a leaching rate in sulfuric acid relative to a Si content in a lithium compound.

Referring to FIG. 7, when a lithium compound is leached with 1 M sulfuric acid at 50°C for 2 hours, the leaching rate of Li in sulfuric acid is shown. As shown in FIG. 7, it can be confirmed that when Si in the lithium compound is limited to 12% or less, leaching is easy even without heating to 900°C or higher.

### <Forms of Reactants According to Control of Raw Material Size and Heat Treatment Conditions>

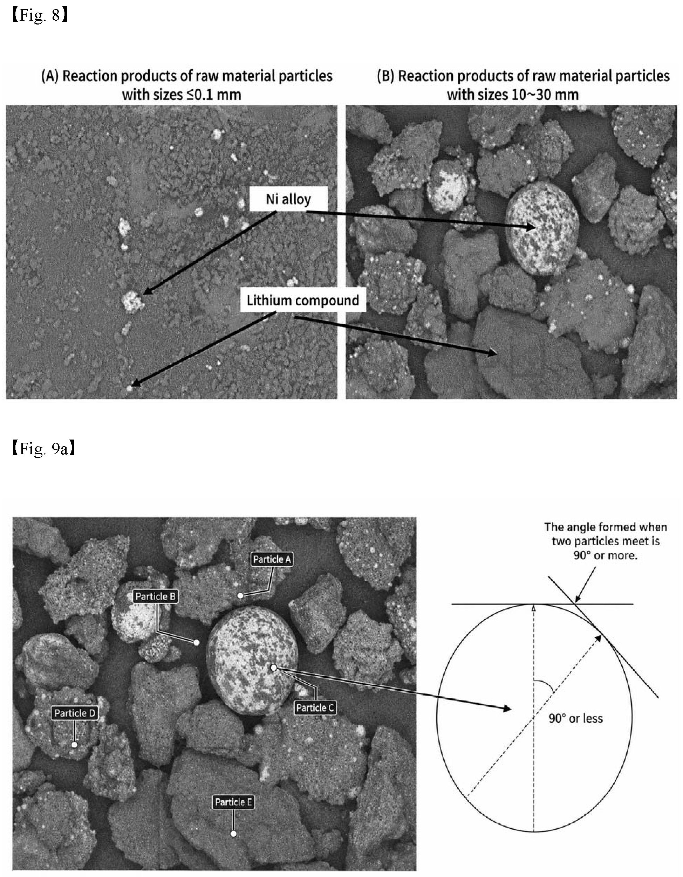

FIG. 8 is a photograph showing forms of reactants according to sizes of raw materials of the present invention.

Referring to FIG. 8, a form of a reactant formed from a raw material having a size of 0.1 mm or less and a form of a reactant formed from a raw material having a size of 10 to 30 mm are shown. In the form of the raw material having a size of 0.1 mm or less, the reactant is also 30 µm or less, and thereafter, because the size of carbon is 30 µm or less, in the case of a nickel alloy, magnetic separation is possible because cobalt is included, but the lithium compound is non-magnetic and has a size similar to that of the carbon, so that there is a problem that separation is difficult.

When the size of the raw material is at a level of 10 to 30 mm, the reactant may also appear to be 0.1 mm or more. Accordingly, the nickel alloy is magnetically separated, and the non-magnetic lithium compound and carbon can be particle-size separated.

At this time, regarding the shape of the reactant, it was confirmed that the nickel-containing nickel alloy has a spherical shape, but the lithium compound has an angular shape.

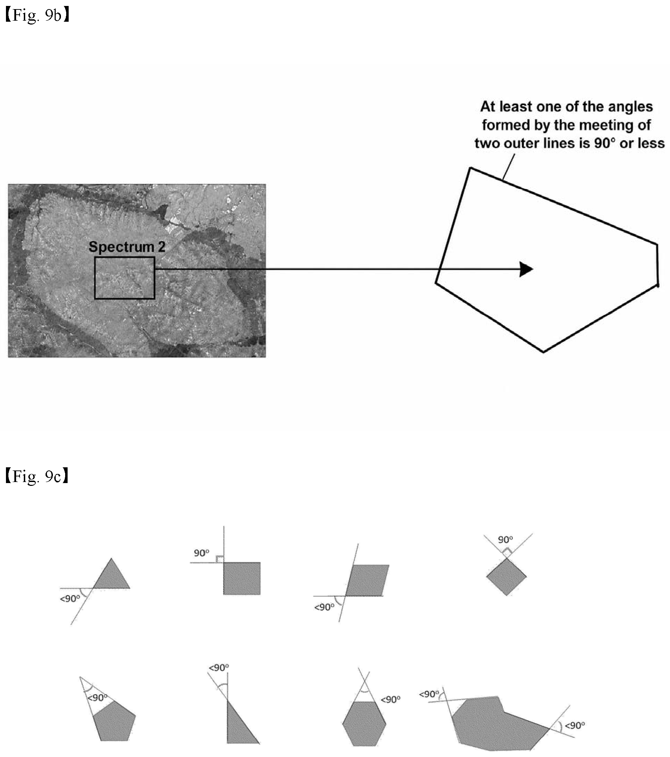

FIG. 9A shows a spherical shape of a nickel alloy, and FIG. 9B is a photograph showing a shape of a lithium compound.

Referring to FIG. 9A, it was confirmed that, in the case of the nickel alloy, within 90° between two lines passing through the center, the angle of tangents of the two lines has 90° or more, thereby forming a circular shape.

In FIG. 9A, components of the nickel alloy and the lithium compound can be confirmed. Referring to FIG. 9B, it was confirmed that the lithium compound has a polygonal shape. Specifically, when a polygon is drawn for the lithium compound using parallel lines on the outside, the lithium compound shows a sharp shape having at least one region in which an angle at which two outer lines meet is 90° or less.

This reaction form is such that, when the content of oxygen is controlled to 5% or less, specifically 1% or less, in the reaction state, carbon in the negative electrode material is maintained at 10% or more based on the total weight, and in the case of the nickel alloy, the carbon maintains a circular shape due to very low wettability, whereas the lithium compound shows a covalent bond form of Li-Al-O while being bonded to the aluminum current collector.

It was confirmed that such a shape is due to a property that the oxide-based material has brittleness when broken or separated by external force, thermal shock during cooling after reaction, phase change, and the like, so that the entire form of the lithium compound shows a polygonal shape. Specifically, it was confirmed that the lithium compound has an interior angle of 90° or less in the polygon.

FIG. 9C shows shapes of lithium compounds having various forms and also includes a method for measuring an angle.

Although preferred embodiments have been described above in detail, the scope of the present invention is not limited thereto, and various modifications and improvements made by those skilled in the art using the basic concept defined in the following claims also fall within the scope of the present invention.

## Claims

1. A composition for recovering a lithium compound, comprising a lithium compound recovered from a waste battery,
wherein the composition for recovering a lithium compound has an angular shape.

2. The composition for recovering a lithium compound of claim 1,
wherein, when a polygon is drawn using lines parallel to an outer side of the composition for recovering a lithium compound from an SEM photograph,
the composition includes a lithium compound having one or more angles of 90° or less at which two outer lines contact each other.

3. The composition for recovering a lithium compound of claim 1,
wherein a length of a major axis among a width, a length, and a height is 0.02 mm or more.

4. The composition for recovering a lithium compound of claim 1,
wherein a content of lithium (Li) is 4 to 35 wt% based on 100 wt% of an entire composition for recovering a lithium compound.

5. The composition for recovering a lithium compound of claim 1,
comprising at least one of LiAlO₂, Li₅AlO₄, LiAl₅O₈, Li₂CO₃, LiF, Li₃PO₄, Li₂SiO₃, Li₄SiO₄, and Li₂Si₂O₅.

6. The composition for recovering a lithium compound of claim 1,
wherein the composition satisfies the following Formula 1: <Formula 1> $\begin{matrix}1 \leq \\ \left(\left[{LiAlO}_{2}\right]+\left[{Li}_{5}{AlO}_{4}\right]+\left[{LiAl}_{5}{O}_{8}\right]\right) / \left(\left[LiF\right]+\left[{Li}_{2}{CO}_{3}\right]+\left[{Li}_{3}{PO}_{4}\right]+\left[{Li}_{2}{SiO}_{3}\right]+\left[{Li}_{4}{SiO}_{4}\right]+\left[{Li}_{2}{Si}_{2}{O}_{5}\right]\right) \leq \\ 10\end{matrix}$
wherein [LiAlO₂], [Li₅AlO₄], [LiAl₅O₈], [LiF], [Li₂CO₃], [Li₃PO₄], [Li₂SiO₃], [Li₄SiO₄], and [Li₂Si₂O₅] mean crystalline phase ratios of LiAlO₂, Li₅AlO₄, LiAl₅O₈, LiF, Li₂CO₃, Li₃PO₄, Li₂SiO₃, Li₄SiO₄, and Li₂Si₂O₅, respectively.

7. The composition for recovering a lithium compound of claim 1,
wherein the composition satisfies the following Formula 2: <Formula 2> $0.1 \leq IA / IB \leq 1.5$
wherein IA is a peak intensity value at 2θ = 21°±0.5° of a LiAlO₂ product, and IB is a peak intensity value at 2θ = 32.6°±0.4° of the LiAlO₂ product.

8. The composition for recovering a lithium compound of claim 1,
wherein the composition satisfies the following Formula 3: <Formula 3> $\left[Al\right] = 0.745 \times \left[Li\right] \pm 0.3$
wherein [Al] and [Li] mean the number of moles of Al and Li in a lithium-containing compound, respectively.

9. A battery processing method, comprising:
preparing a battery including lithium (Li) and aluminum (Al);
shredding the battery into battery shredded material; and
high-temperature heat-treating the shredded battery shredded material,
wherein the high-temperature heat-treating comprises heat-treating in a temperature range of 600 to 1,500°C,
wherein, in the preparing of the battery, lithium and aluminum in the battery satisfy the following Formula 4: <Formula 4> $0.1 \leq \left[Li\right] / \left[Al\right] \leq 1.0$
wherein, in Formula 4, [Li] and [Al] mean weight ratios (wt%) of lithium and aluminum in the battery, and
wherein the method comprises a sorting method using magnetism, specific gravity, size separation, or the like, for a material obtained through the heat treatment.

10. The battery processing method of claim 9,
wherein, in the shredding of the battery into the battery shredded material,
the battery shredded material has a structure in which a positive electrode material including a current collector and a negative electrode material including carbon are stacked.

11. The battery processing method of claim 10,
wherein, in the stacked structure, the positive electrode material and the negative electrode material maintain an interval of 0.01 to 5 mm.

12. The battery processing method of claim 9,
wherein, in the shredding of the battery into the battery shredded material,
the battery shredded material has a tap density of 200 to 1000 kg/m³.

13. The battery processing method of claim 9,
further comprising, after the high-temperature heat-treating of the shredded battery shredded material,
pulverizing a high-temperature heat-treated lithium-containing composition.

14. The battery processing method of claim 9,
wherein the shredding of the battery is performed such that the battery is shredded to have a size of 5 to 50 mm.

15. The battery processing method of claim 9,
further comprising, after the high-temperature heat-treating of the shredded battery shredded material,
leaching and recovering a high-temperature heat-treated lithium-containing composition with an acidic solution having a pH of 1 to 5.

16. The battery processing method of claim 9,
wherein, in performing the shredding of the battery,
the method comprises controlling a distribution such that a ratio of a material having a size of 0.1 to 100 mm is 60% or more in an entire raw material.

17. The battery processing method of claim 9,
comprising, after the high-temperature heat treatment step,
magnetically separating a heat-treated result at a magnetic force intensity of 1000 G or more.

18. The battery processing method of claim 9,
comprising, after the high-temperature heat treatment step,
particle-size separating a lithium compound having a maximum value of a major-axis length of 20 µm or more among a heat-treated result.

19. The battery processing method of claim 9,
comprising, after the high-temperature heat treatment step,
specific-gravity separating, with respect to a heat-treated result, a lithium compound smaller than 3 based on a bulk specific gravity of 3.
